Europäisches Patentamt

**European Patent Office**

Office européen des brevets

(11) Publication number: **0 246 375 B1**

(12) **EUROPEAN PATENT SPECIFICATION**

(45) Date of publication of patent specification: **31.07.91** (51) Int. Cl.5: **G11B 5/55**, G11B 5/54

(21) Application number: **86303939.2**

(22) Date of filing: **23.05.86**

(54) **Head/arm assembly and rotary access mechanism for a disk file.**

(43) Date of publication of application:
**25.11.87 Bulletin 87/48**

(45) Publication of the grant of the patent:
**31.07.91 Bulletin 91/31**

(84) Designated Contracting States:
**DE FR GB**

(56) References cited:
**EP-A- 0 060 358
EP-A- 0 121 057
WO-A-87/02498
FR-A- 2 089 595
GB-A- 2 005 379**

**PATENTS ABSTRACTS OF JAPAN, vol. 9, no.
297 (M-432)[2020], 25th November 1985; &
JP-A-60 136 632**

**PATENTS ABSTRACTS OF JAPAN, vol. 9, no.
170 (P-373)[1893], 16th July 1985; & JP-A-60
47 272**

**IBM TECHNICAL DISCLOSURE BULLETIN, vol.
25, no. 2, July 1982, pages 835,836, Armonk,
New York, US; T.P. BREW et al.: "Assembly of
head/arm stacks on rotary actuator"**

(73) Proprietor: **International Business Machines
Corporation
Old Orchard Road
Armonk, N.Y. 10504(US)**

(72) Inventor: **Cooper, Roger Anthony
Quagg Cottage 66 Granada Road
Hedge End Southampton(GB)**
Inventor: **Hearn, Anthony Roger
164 Downs Road South Wonston
Winchester Hampshire(GB)**
Inventor: **Castle, Frank Eric
35 Courtenay Road
Winchester Hampshire(GB)**

(74) Representative: **Moss, Robert Douglas
IBM United Kingdom Limited Intellectual
Property Department Hursley Park
Winchester Hampshire SO21 2JN(GB)**

## Description

Technical Field of the Invention

The present invention relates to head/arm assemblies for disk files and to rotary access mechanisms comprising such assemblies in combination with a rotary actuator.

Background Art

One of the most common forms of information storage apparatus is the disk file in which information is written on and reproduced from the surface of a rotating disk record medium by means of a transducing head. The disk media may be rigid or flexible and the storage effect may be, for example, optical or magnetic. It is common, particularly in magnetic recording, to support the transducing head very close to the disk medium by means of an air bearing created by the motion of the disk. To access information on different areas of the disk, it is also well known to provide linear or rotary head positioning apparatus to move the heads over the disk surface to different radial positions. The heads are supported over the disk surface by means of support arms mounted on the positioning apparatus in cantilever fashion. The heads are mounted on the support arms by means of compliant suspensions which allow limited motion of the heads to accommodate irregularities in the disk surface or variations in the air bearing. Together the head/arm assemblies and the positioning apparatus constitute an access mechanism for accessing information stored on the disks.

Vibration or resonance of the support arms can have a deleterious effect on the performance of the information storage apparatus for a number of reasons. In the case of a movable head, it is well known to employ a closed loop servo system to control the positioning apparatus to position the head accurately over a desired concentric track of recorded information on the disk. Vibration of the head support arm can cause the head to move off track and introduce an error signal into the servo system which is modulated at the vibration frequency. It is often the case that the resonant frequency of the head support arm or other moving mechanical components is such as to cause instability of the servo system. Another effect of resonance of a head support arm is the degradation of the signal from the transducing head by modulation of the transduced signal.

In an article entitled "Damped Head Arm" by R E Norwood (IBM Technical Disclosure Bulletin, Volume 21, Number 8, January 1979, page 3093), a constrained layer damping technique is suggested to overcome both these problems. The constrained layer is parallel to the plane of the disk and absorbs energy by bending to effect the damping.

Shear damping is described in patent application WO87/02498 (state of the art under EPC article 54(3) only) which shows a floating mass damper mounted at the end of the accessing head arm structure. The damper includes a spring centred floating mass which rests on a viscous film, and wherein shear forces developed by motion of the floating mass across the film dissipate vibrational mode energy in the accessing head arm structure.

Damping has also been employed in different though related areas of disk files such as the head positioning apparatus itself. Patent number GB-B-2005379 shows a two part linear actuator for positioning heads radially with respect to the disks. Damping of longitudinal resonances in the actuator is provided by a cylindrical layer of damping material between the two parts through which actuator forces are transmitted in shear. No damping of the head support arms themselves is shown.

Shear damping is again employed in the head support arm of a disk file described in patent number EP-B-0060358. A cantilever head support arm for a disk file comprises a flat beam structure and a means of damping out-of-plane vibrations. The sampling means comprises a rigid side bar extending along one longitudinal edge of the beam structure and side bar together. Relative motion between the beam structure and side bar causes elastic shear deformation of the damping layer to absorb the energy of vibration. The head arm forms part of a head/arm assembly comprising a stack of arms for mounting on the spindle of a rotary head positioning actuator. The arm stack is balanced about the axis of rotation by a counterweight attached to the arms.

By employing damping in a servo controlled head positioning system, the transfer function of the overall mechanical system may be modified at points of instability so that a higher than otherwise gain bandwidth characteristic can be employed. This in turn allows faster access movement and tighter control of track following.

Another method of damping, is "auxiliary mass damping" in which auxiliary masses are attached to vibrating system by springs and damping devices to assist in controlling the amplitude of vibration of the system. The principles are explained in an article entitled "Dynamic vibration absorbers and auxiliary mass dumpers" by F Everett Reed (Chapter 6, Shock and Vibration handbook, Second Edition, edited by C M Harris and C E Crede, McGraw-Hill, 1976). A mechanical damper for use with open loop driven stepper motors is described in Patent Application number EP-A-0128650. The damper comprises an inertial mass which is concentrically coupled to the capstan of the band drive by means of an energy absorbing elastomer. The mass applies a dynamic force to the stepper motor which opposes and counteracts any unwanted oscillators of the stepper motor.

Disclosure of the Invention

Although the prior art has provided many ways of damping out troublesome vibrations in head/arm assemblies and access mechanisms, none of these have been designed to damp inherent torsional resonances in rotary access mechanisms which can occur within the desired bandwidth of a high performance servo controlled head positioning system.

Accordingly the present invention provides a head/arm assembly for a disk file, said head/arm assembly comprising at least one substantially planar cantilever arm for supporting a transducing head at or near the free end thereof; a counterweight means; an attachment means for attaching the counterweight means at the opposite end of the arm so that the head/arm assembly is balanced under predetermined conditions about an axis through the assembly perpendicular to the plane of the arm; and locating means for locating the head/arm assembly on a rotary actuator with said axis coincident with the axis of rotation of the actuator, the actuator being subject to inherent torsional resonances about its axis of rotation; the head/arm assembly being characterised in that:-

at least a portion of the counterweight means is resiliently supported at said opposite end of the arm so as to act as an auxiliary mass damper tuned relative to the fundamental resonant frequency of torsional oscillation of the rotary actuator.

From another aspect, the invention also provides a rotary access mechanism for a disk file, the rotary access mechanism comprising such a head/arm assembly, and a rotary actuator having complementary locating means engageable with the locating means of the head/arm assembly and means for joining the actuator and head/arm assembly together.

The dual use of the counterweight both as a balance and as an auxiliary mass damper affords a compact and convenient technique for modifying the transfer function of the mechanical loop to improve gain/bandwidth characteristics. A large peak at the resonance frequency is split into two smaller peaks occurring at lower and higher frequencies. The predetermined conditions of balance may be static or, more probably, dynamic at a selected low frequency.

Although it is possible that the entire counterweight mass will be needed as the auxiliary mass for damping, in general this will not be the case. It is then preferred that the counterweight is divided into a main body and an adaptor member connected together by the resilient connection. The adaptor member would be rigidly attached to the arm by the attachment means. Thus, it is possible to select the auxiliary damping mass and the total balancing mass independently.

The resilient connection may take any form, including springs, but is preferably a layer of elastomeric material operating in shear. Where the counterweight is divided, such an elastomeric layer would preferably be sandwiched between the counterweight and adaptor member. A preferred material for the layer is carbon filled ethylene propylene diamine (EPDM).

Although a sandwiched shear layer is preferably planar other forms such as an arcuate layer could be employed.

Finally, although compactness might dictate that the counterweight shape is such that its dimensions are minimised, it has been discovered that a counterweight including a projecting portion, projecting clear of the arm and the resilient connection in a direction perpendicular to the plane of the arm can further improve the transfer function by bringing the split resonance peaks wholly within those of the original undamped transfer function.

Brief Description of the Drawings

The present invention will now be described, by way of example only, with reference to the accompanying drawings, in which:

Figure 1 is a side elevation of a head/arm assembly according to the present invention;

Figure 2 is a plan view of the underside of the head/arm assembly of Figure 1;

Figure 3 is an end elevation of the head/arm assembly of Figure 1;

Figure 4 is a plan view of a rotary actuator for positioning the head/arm assembly of Figures 1 to 3 in combination with which it forms a rotary access mechanism according to the present invention;

Figure 5 illustrates the theoretical effect on the transfer function of the mechanical system including a head/arm assembly of the inclusion of an auxiliary mass damper;

Figure 6 shows a transfer function of a mechanical system including the head/arm assembly of Figure 1 in comparison with the transfer function of a similar system not including an auxiliary mass damper;

Figure 7 is a side elevation of an alternative head/arm assembly according to the present invention;

Figure 8 is a plan view of the underside of the head/arm assembly of Figure 7;

Figure 9 is an end elevation of the head/arm assembly of Figure 7; and

Figure 10 shows a transfer function of a mechanical system including the head/arm assembly of Figures 7 to 9 in comparison with the transfer function of a similar system not including an auxiliary mass damper.

## Detailed Description of the Invention

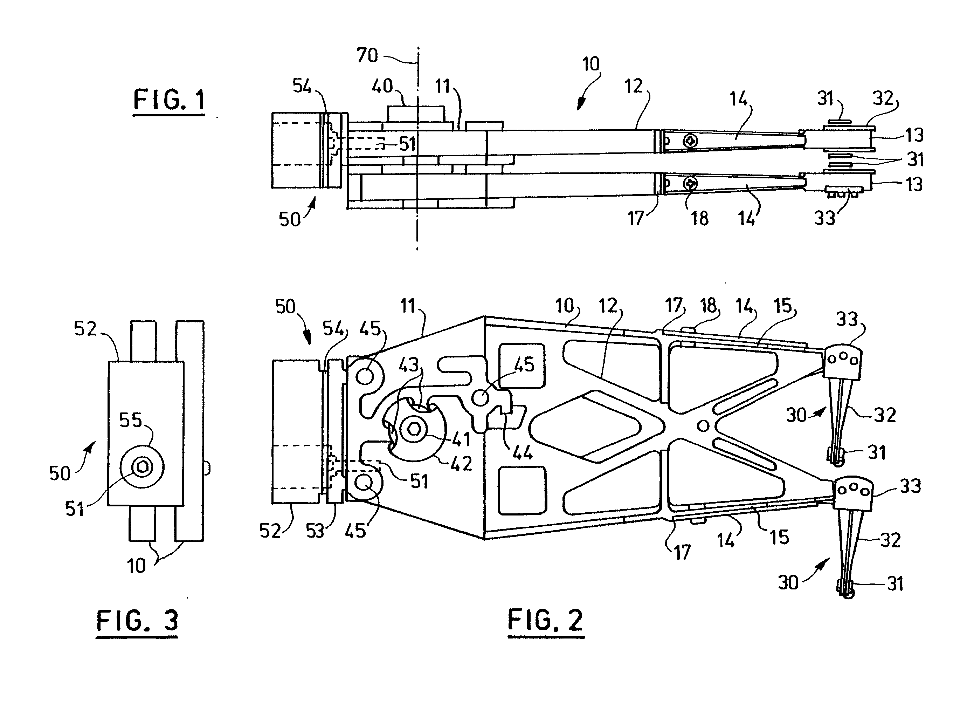

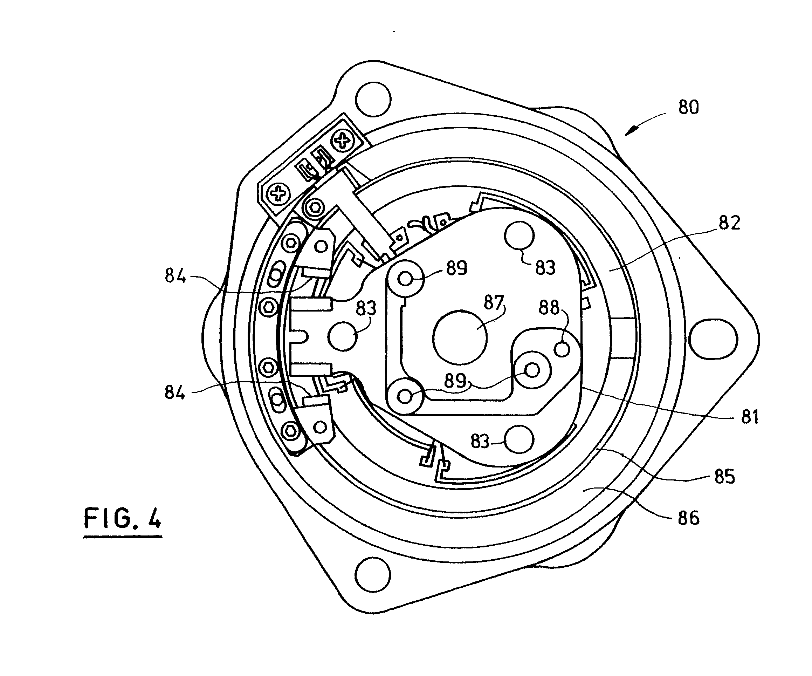

The head/arm assembly according to the invention which is illustrated in Figures 1 to 3 is designed to be located on and positioned by the rotary actuator illustrated in Figure 4 in order to access information storage tracks on the surfaces of a stack of disks (not shown) in a disk file.

The head/arm assembly consists of two stacked cantilever arms 10, 11 of substantially planar form. The arms 10 each support at their tips a number of head suspension subassemblies 30. At the opposite end of the arm stack is a counterweight 50 for balancing the arm at a predetermined low frequency about an axis of rotation 70.

In more detail, each arm 10 is a flat aluminium beam structure consisting of a thick parallel faced base portion 11 and a tapering extension framework 12, terminating in two head support blocks 13. Two aluminium sidebars 14 are located on respective limbs 15 of the arm 10 by features 17. The side bars 14 are bonded to the limbs by a layer of double sided adhesive tape (not shown) and fixed at one end by screws 18. The purpose of the sidebars is to damp out-of-plane resonances of the arms 10 in the manner explained in more detail in our European patent number EP-B-0060358.

Bolted to each of the head support blocks 13 of the arms 10 are the head suspension subassemblies 30, each comprising a head 31 on the end of a leaf spring flexure 32. Each block 13 of the upper arm 10 supports two such sub-assemblies 30. The lower block 13 has only one head suspension subassembly 30, on its upper surface. The lower surface, which is not adjacent a disk, has a metal target plate 33 used in servowriting during manufacturing. Each head 31 is in the form of an air bearing slider on which a thin film transducing element (not shown) has been formed.

The head suspension subassemblies are described in more detail in our US-A-4.167.765. External electrical connection of heads 31 is by means of wires 34 which lead to a tape cable (not shown) on the upper surface of the arm 10 and in turn to a conventional flexible cable (omitted for clarity) on the side of the arm stack.

It will be clear that the flexures 32 are inclined out of the plane of arms 10 to urge their respective heads 31 towards the surface of an information storage disk (not shown) which, in operation, rotates past the head 31. One such disk will pass between the arms 10 while another will pass over the top of the upper arm.

After each arm 10 has been populated with heads and suspensions, the two arms are aligned and clamped together by means of a mandrel 40 passing through a large bore in each arm centred on axis 70. Clamping is effected by a draw bolt 41 which draws a clamp plate 42 towards the lower end of the mandrel until the plate engages the underside of base portion 11 of the lower arm 10. To complete the construction of the head/arm assembly, the counterweight 50, which will be described in more detail below, is bolted to the upper arm 10 by bolt 51.

The head/arm assembly of Figures 1 to 3 is designed to be located on the rotary actuator 80 shown in Figure 4. The actuator is similar to that shown in our European patent number EP-B-0031876 and includes a spindle extension table 81 for receiving the head/arm assembly. The table 81 is integral with an underlying spindle mounted for rotation in bearings about an axis coincident with axis 70. The table 81 is joined to the upper surface of a cup rotor 82 by means of reversed bosses 83. The rotor, which comprises encapsulated pancake coil windings located within a flux gap in a magnetic circuit, is only permitted a very limited angle of rotation defined by crash stops 84. A portion 85 of the flux gap is visible between the outer edge of the rotor and its soft magnetic shroud 86.

The head/arm assembly is located axially on the spindle extension table 81 by the engagement of two features 43 on the underside of the lower arm 10 with a boss 87 on the table 81. Circumferential location is provided by the engagement of a nib 44 on the arm with a post 88 on a table 81. When so located, the head/arm assembly and actuator table are bolted together through bores 45 in the stack to threaded bores 89 in the actuator table. A similar assembly procedure is described in an article entitled 'Assembly of head/arm stacks on rotary actuator (IBM Technical Disclosure Bulletin Vol 25 No 2, July 1982 pp 835-836),

When assembled in this manner in a disk file the actuator 80 is servo controlled to position heads 31 over selected tracks on the disks. Servo patterns written on the disks are detected by heads 31 and modulated to provide position error feedback to the servo system. For maximum performance, the servo system must be designed with an appropriate gain/bandwidth characteristics. However, resonances in the mechanical system may necessitate a reduction in the bandwidth of the servo system to prevent instability and thus limit access time and track density.

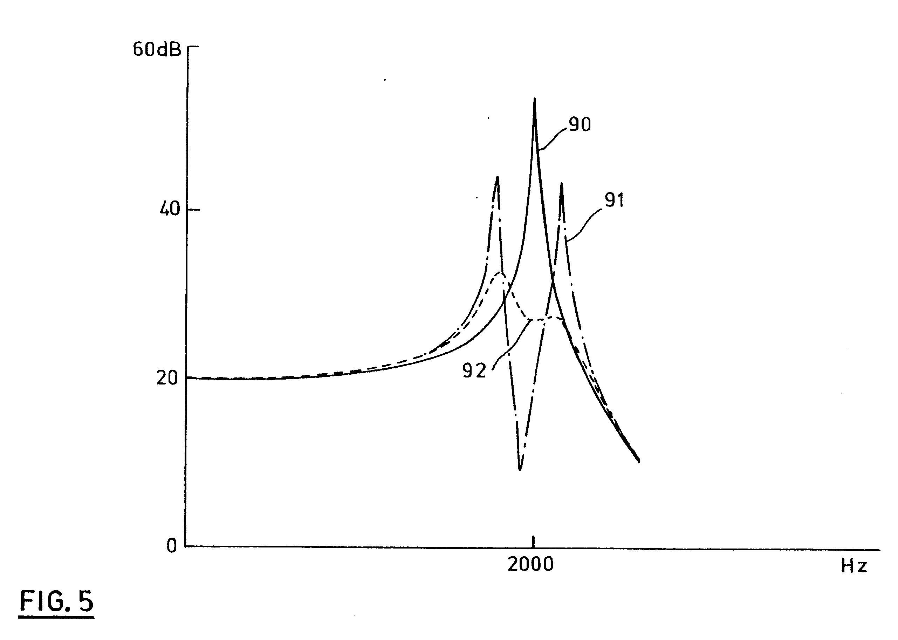

To study this type of problem, it is convenient to plot a transfer function of the mechanical system showing the ratio of output acceleration to input drive over a frequency range (expressed in dB). Some theoretical transfer functions for modelled servo and mechanical system similar to the actuator and head/arm assembly combination of Figures 1 to 4 are shown in Figure 5. The continuous line 90 shows that a strong resonance exists at about 2 KHz. Analysis of the mechanical design suggests that this derives from an inherent torsional resonance about the axis of rotation of the actuator.

By modifying the counterweight 50 of the head/arm assembly so that part of its mass functions as an auxiliary mass damper, it has been found possible to split the resonance into two components of lower amplitude. The theoretical effect is shown by the broken lines 91 and 92 in Figure 5.

Both modified transfer functions are produced by tuning the auxiliary mass according to the expression

$$f_a/f_o = 1/(1 + m/M)^{\frac{1}{2}}$$

where

m is the auxiliary mass

M is the mass of the moving system

$f_a$ is the tuned frequency of the auxiliary mass damper

and $f_o$ is the original resonance frequency

Functions 91 and 92 differ according to the degree of additional damping introduced.

In practice, the counterweight 50 is divided into an auxiliary mass portion 52 and an adaptor plate 53. This permits the auxiliary mass to be tuned to the correct frequency irrespective of the overall mass of the counterweight needed to balance the assembly. The mass 52 and plate 53 are joined by a layer 54 of carbon filled EPDM (ethylene propylene diamine) which provides the necessary resilient connection for the auxiliary mass 52. Shear damping by layer 54 also absorbs additional energy to reduce further the amplitude of the resonance. The layer 54 is moulded between the plane faces of mass 52 and plate 53 and cured in situ to bond to the faces. Because it has a low glass transition temperature, EPDM offers a more stable stiffness for the resilient connection over the working temperature range. Furthermore, such temperature changes as do occur do tend to result in the damping frequency tracking the rotor resonance frequency which also shifts with temperature.

As described earlier the entire counterweight 50 is bolted to the upper arm 10 by bolt 51 which is seated in the adaptor plate 53. A large hole 55 through the auxiliary mass 52 and damping layer 54 allows the bolt 51 to be inserted.

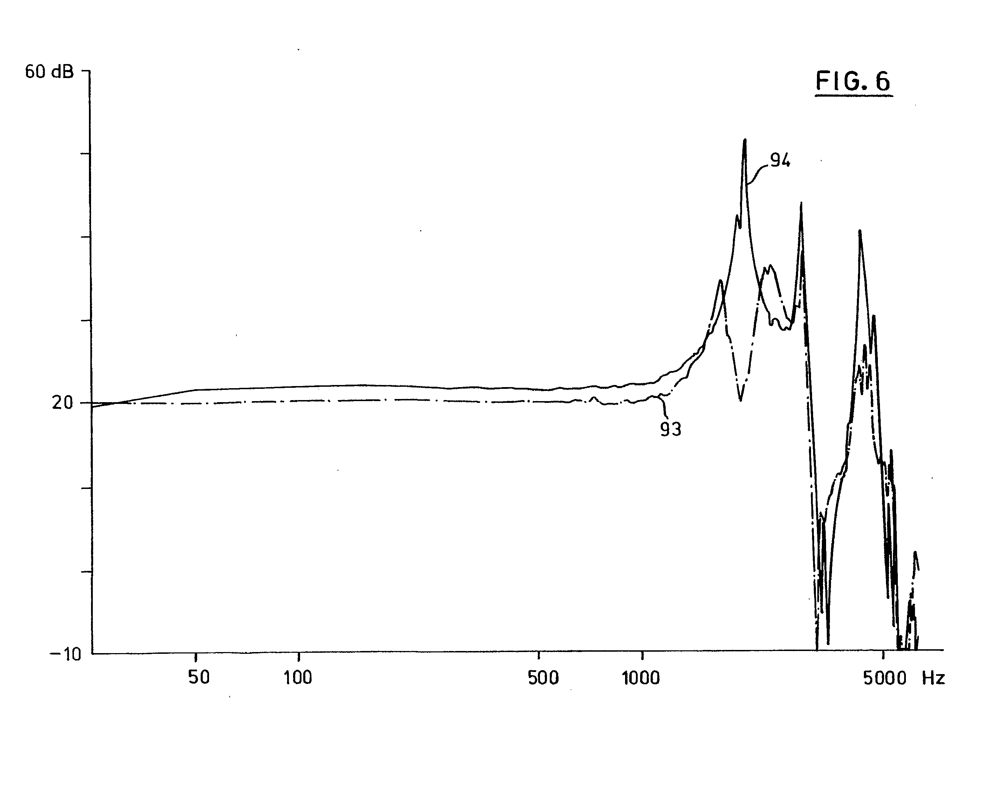

The actual transfer function of one of the heads 31 is shown in Figure 6 by the broken line 93. This may be compared with the original transfer function 94 (shown as a continuous line) obtained without the use of auxiliary mass damping. Clearly the fundamental resonance at 2 KHz is split and substantially lowered.

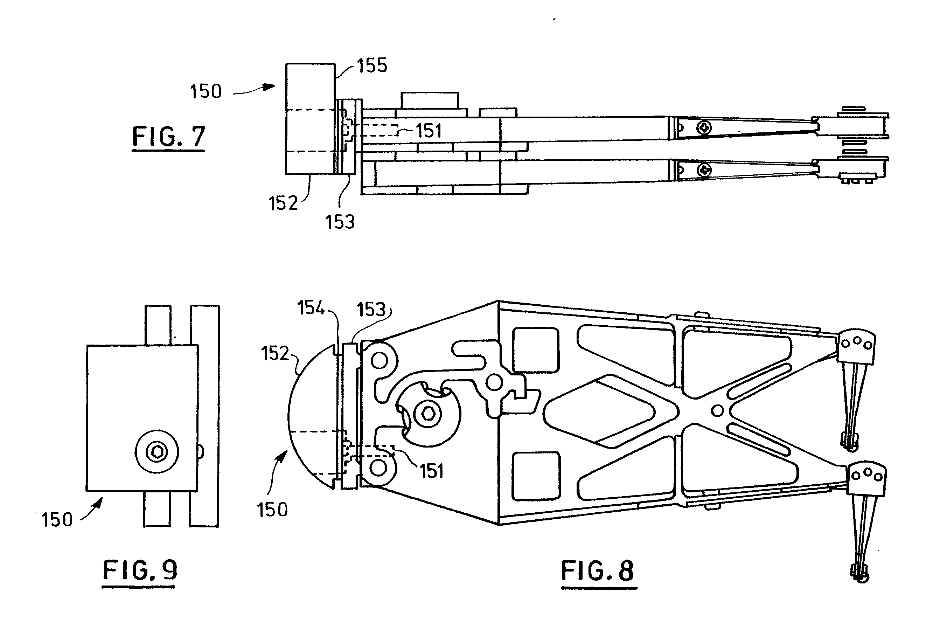

A modified form of counterweight is shown in Figures 7, 8 and 9. Apart from the counterweight 150, the head/arm assembly illustrated corresponds exactly to that shown in Figures 1, 2 and 3 and will not be described again.

Counterweight 150 is also divided into auxiliary mass 152 and an adaptor plate 153 joined by a shear damping layer 154. The counterweight is bolted to the upper head arm by a bolt 151. However, the auxiliary mass 152 is differently shaped from the mass 52 in being part circular cylindrical and in having a projecting portion 155. This portion extends clear of the upper arm and of the damping layer 154, perpendicular to the plane of the arm.

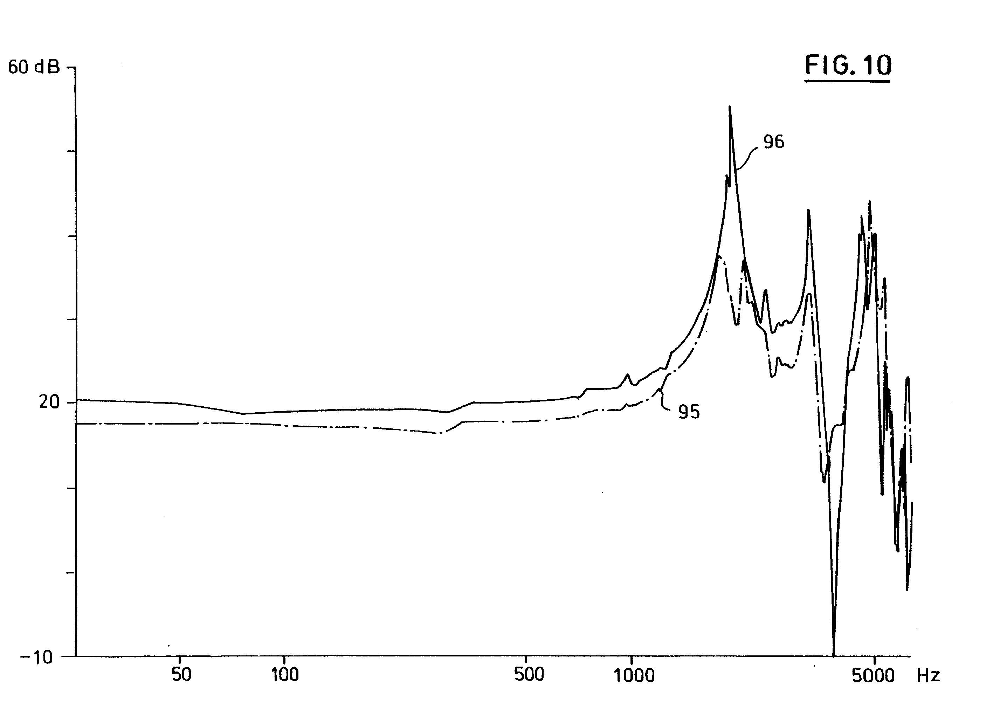

It has been found, as shown in Figure 10, that the transfer function 95 achieved with the alternatively shaped auxiliary mass 152 lies wholly within the undamped transfer function 96 in the frequency range of interest. The reason for this is not completely understood, but is believed to be additional damping of a twisting mode of arm resonance in which one head support block rises while the other falls.

## Claims

1. A head/arm assembly for a disk file, said head/arm assembly comprising at least one substantially planar cantilever arm (10) for supporting a transducing head (31) at or near the free end thereof;

   counterweight means (50);

   an attachment means (51,54) for attaching the counterweight means at the opposite end of the arm (10) so that the head/arm assembly is balanced under predetermined conditions about an axis (70) through the assembly perpendicular to the plane of the arm (10); and

   locating means (43,44,45) for locating the head/arm assembly on a rotary actuator (80) with said axis coincident with the axis of rotation of the actuator (80), the actuator being subject to inherent torsional resonances about its axis of rotation; the head/arm assembly being characterised in that:-

   at least a portion (52) of the counterweight means (50) is resiliently supported at said opposite end of the arm so as to act as an auxiliary mass damper tuned relative to the fundamental resonant frequency of torsional oscillation of the rotary actuator (80).

2. A head/arm assembly as claimed in claim 1 in which the counterweight means (50) is divided into a main body (52) and an adaptor member (53) connected together by a resilient connection (54) by means of which the main body is resiliently supported at said opposite end of the arm, the attachment means including means (51) for rigidly attaching the adaptor member to the arm.

3. A head/arm assembly as claimed in claim 1 or claim 2, in which the resilient connection includes a shear layer (54) of elastomeric material.

4. A head/arm assembly as claimed in claim 3, in which the elastomeric material is carbon filled ethylene propylene diamine.

5. A head/arm assembly as claimed in claim 3 as dependent on claim 2 or in claim 4, in which the elastomeric layer (54) is sandwiched between the main body (52) and the adaptor member (53).

6. A head/arm assembly as claimed in claim 5, in which the elastomeric layer (54) is a planar layer and the adaptor member (53) is a plate, the means for rigidly attaching the adaptor member to the arm comprising a bolt (51).

7. A head/arm assembly as claimed in any preceding claim in which the counterweight means (150) includes a projecting portion (155), projecting clear of the arm and the resilient connection (154) in a direction perpendicular to the plane of the arm.

8. A head/arm assembly as claimed in any preceding claim in which the arm (10) is one of a plurality of such arms (10) which are joined together to form a stack, the attachment means (51,54) attaching the counterweight means (50) to only one of the arms (10).

9. A rotary access mechanism for a disk file, the rotary access mechanism comprising a head/arm assembly (10,30,50) as claimed in any preceding claim;
a rotary actuator (80) having complementary locating means (87,88,89) engageable with the locating means (43,44,45) of the head/arm assembly; and
means for joining the actuator and head/arm assembly together.

**Revendications**

1. Ensemble tête/bras pour une unité de disques, ledit ensemble tête-bras comprenant au moins un bras en console sensiblement plat (10) servant à supporter une tête de transduction (31) sur ou à proximité de son extrémité libre;
des moyens de contrepoids (50)
des moyens de fixation (51,54) servant à fixer les moyens de contrepoids à l'extrémité opposée du bras (10) de sorte que l'ensemble tête/bras est équilibré dans des conditions prédeterminées autour d'un axe (70) traversant l'ensemble perpendiculairement au plan du bras (10); et
des moyens de positionnement (43,44,45) servant à charger l'ensemble tête/bras sur au actionneur rotatif (80), ledit axe coincidant avec l'axe de rotation de l'actionneur (80) et l'actionneur étant soumis à des résonances de torsion propres autour de son axe de rotation;
l'ensemble tête/bras étant caractérisé en ce que:
au moins une partie (52) des moyens de contrepoids (50) est supportée élastiquement sur ladite extrémité opposée due bras de maniére à agir en tant qu'amortisseur de masse auxiliaire accordé sur la fréquence de résonance fondamentale de l'oscillation de torsion de l'actionneur rotatif (80).

2. Ensemble tête/bras selon la revendication 1, dans lequel les moyens de contrepoids (50) est subdivisé en un corps principal (52) et un élément formant adaptateur (53), qui sont raccordés entre eux par une liaison élastique, au moyen de laquelle le corps principal est supporté élastiquement sur ladite extrémité opposée du bras, les moyens de fixation incluant des moyens (51) servant à fixer rigidement l'élément formant adapteur au bras.

3. Ensemble tête/bras selon la revendication 1 ou 2, dans lequel la liaison élastique inclut une couche de cisaillement (54) formée d'un matériau élastomère.

4. Ensemble tête/bras selon la revendication 2, dans lequel le matériau élastomère est une diamine éthylène-propylène chargée de carbone.

5. Ensemble tête/bras selon l'une quelconque des revendications 3 et 4, dépendantes de la revendication 2, dans lequel la couche élastomère (54) est intercalée entre le corps principal (52) et l'élément formant adaptateur (53).

6. Ensemble tête/bras selon la revendication 5, dans lequel la couche élastomère (54) est une couche plane et l'élément formant adaptateur (53) est une plaque, les moyens permettant de fixer rigidement l'élément formant adaptateur au bras comprenant au boulon (51).

7. Ensemble tête/bras selon l'une quelconque des revendications précédentes, dans lequel les moyens de contrepoids (150) inclut une partie saillante (155), qui fait saillie à partir du bras et de la liaison élastique (154) dans une direction perpendiculaire au plan du bras.

8. Ensemble tête/bras selon l'une quelconque des revendications précédentes, dans lequel le bras (10) est un bras faisant partie d'une pluralité de tels bras (10), qui sont réunis pour former un empilage, les moyens de fixation (51,54) rattachant les moyens de contrepoids (50) a l'un seulement des bras (10).

9. Mécanisme d'accès rotatif pour une unité de disques, le mécanisme d'accès rotatif comprenant un ensemble tête/bras (10,30,50) selon l'une quelconque des revendications précédentes;
un actionneur rotatif (80) possédant des moyens complémentaires de positionnement (87,88,89) pouvant engrener avec les moyens de positionnement (43,44,45) de l'ensemble tête/bras; et
des moyens pour réunir entre eux l'actionneur et l'ensemble tête/bras.

**Patentansprüche**

1. Eine Kopf/Arm-Einheit für einen Plattenspeicher, wobei die Kopf/Arm-Einheit aufweist: zumindest einen im wesentlichen ebenen freitragenden Arm (10) zum Tragen eines Wandlerkopfes (31) an oder nahe an dessen freiem Ende,

Gegengewichtsmittel (50),

Befestigungsmittel (51,54) zum Befestigen des Gegengewichtsmittels an dem gegenüberliegenden Ende des Armes (10) so, daß die Kopf/Arm-Einheit unter vorbestimmten Bedingungen um eine Achse (70) ausgeglichen ist, die durch die Einheit senkrecht zu der Ebene des Armes (10) liegt und

Anordnermittel (43,44,45) zum Anordnen der Kopf/Arm-Einheit auf einem Drehstellglied (80) mit der Achse so, daß sie mit der Drehachse des Stellgliedes (80) zusammenfällt, wobei das Stellglied eigenen Torsionsresonanzen um seine Drehachse unterworfen ist, und die Kopf/Arm-Einheit dadurch gekennzeichnet ist, daß:

zumindest ein Teil (52) des Gegengewichtsmittels (50) an dem gegenüberliegenden Ende des Armes federnd so getragen ist, daß er wie ein Hilfsmassendämpfer wirkt, der relativ zu der Grund-Resonanzfrequenz der Torsionsschwingung des Drehstellgliedes (80) abgestimmt ist.

2. Kopf/Arm-Einheit nach Anspruch 1, bei welcher das Gegengewichtsmittel (50) in einen Hauptkörper (52) und ein Anpaßglied (53) aufgeteilt ist, die durch eine federnde Verbindung (54) miteinander verbunden sind, mittels welcher der Hauptkörper federnd an dem gegenüberliegenden Ende des Armes getragen ist, wobei das Befestigungsmittel ein Mittel (51) zum starren Befestigen des Anpaßgliedes an dem Arm aufweist.

3. Kopf/Arm-Einheit nach Anspruch 1 oder 2, bei welcher die federnde Verbindung eine Scherungsschicht (54) aus einem elastischen Material aufweist.

4. Kopf/Arm-Einheit nach Anspruch 3, bei welcher das elastische Material ein kohlenstoffversetztes Ethylen-Propylen-Diamin ist.

5. Kopf/Arm-Einheit nach irgendeinem der Ansprüche 3 und 4, wie von Anspruch 2 abhängig, bei welcher die elastische Schicht (54) zwischen dem Hauptkörper (52) und dem Anpaßglied (53) angeordnet ist.

6. Kopf/Arm-Einheit nach Anspruch 5, bei welcher die elastische Schicht (54) eine ebene Schicht ist und das Anpaßglied (53) eine Platte ist, wobei das Mittel zum starren Befestigen des Anpaßgliedes an dem Arm einen Bolzen (51) aufweist.

7. Kopf/Arm-Einheit nach irgendeinem vorgehenden Anspruch, bei welcher das Gegengewichtsmittel (150) einen vorspringenden Teil (155) aufweist, der von dem Arm und der federnden Verbindung (154) in eine zu der Ebene des Armes senkrechte Richtung frei vorspringt.

8. Kopf/Arm-Einheit nach irgendeinem vorgehenden Anspruch, bei welcher der Arm (10) einer aus einer Mehrzahl solcher Arme (10) ist, die zusammengefügt sind, um einen Stapel zu bilden, wobei das Befestigungsmittel (51,54) das Gegengewichtsmittel (50) nur an einem der Arme (10) befestigt.

9. Drehzugreifermechanismus fur einen Plattenspeicher, wobei der Drehzugreifermechanismus aufweist: eine Kopf/Arm-Einheit (10,30,50) nach irgendeinem vorgehenden Anspruch,

ein Drehstellglied (80) mit komplementären Anordnermitteln (87,88,89) die in die Anordnermittel (43,44,45) der Kopf/Arm-Einheit eingreifen können und

Mittel zum Zusammenfügen des Stellgliedes und der Kopf/Arm-Einheit.

FIG. 1

FIG. 2

FIG. 3

FIG. 4

FIG. 5

EP 0 246 375 B1

FIG. 6

FIG. 7

150

155

151

152

153

FIG. 9

150

150

FIG. 8

154  153

152

151

EP 0 246 375 B1

FIG. 10

EP 0 246 375 B1